(19) **Europäisches Patentamt**

**European Patent Office**

**Office européen des brevets**

(11) Veröffentlichungsnummer: **0 044 290**
**B1**

(12) **EUROPÄISCHE PATENTSCHRIFT**

(45) Veröffentlichungstag der Patentschrift:
02.10.85

(21) Anmeldenummer: 81890113.4

(22) Anmeldetag: 01.07.81

(51) Int. Cl.⁴: **H 02 P 8/00,** H 02 K 37/00

(54) Schaltungsanordnung zum Beeinflussen der Stromwendung bei Schrittmotoren.

(30) Priorität: 10.07.80 AT 3611/80

(43) Veröffentlichungstag der Anmeldung:
20.01.82 Patentblatt 82/3

(45) Bekanntmachung des Hinweises auf die Patenterteilung:
02.10.85 Patentblatt 85/40

(84) Benannte Vertragsstaaten:
DE FR GB IT

(56) Entgegenhaltungen:
DD - B - 139 966
DE - A - 2 634 502
FR - A - 2 325 237

(73) Patentinhaber: Friedmann & Maier Aktiengesellschaft,
Friedmannstrasse 7, A-5400 Hallein bei Salzburg (AT)

(72) Erfinder: Brasseur, Georg, Eisslergasse 20, A-1130 Wien
(AT)

(74) Vertreter: Kretschmer, Adolf, Dipl.-Ing.,
Schottengasse 3a, A-1014 Wien (AT)

## Beschreibung

Die Erfindung betrifft eine Schaltungsanordnung zur Beeinflussung der Stromwendung bei einem Schrittmotor, bei dem die Phasenwicklung bzw. Phasenwicklungen jeweils zur Bildung eines Schwingkreises mit einem zusätzlichen Kondensator beschaltet und an die Brückendiagonale einer aus vier Schalttransistoren bestehenden Transistorbrückenschaltung angeschlossen ist bzw. sind, wobei zu zwei mit dem einen Pol der Betriebsspannung verbundenen Transistorschaltern Schutzdioden parallelgeschaltet sind.

Schrittmotoren werden in zunehmendem Maße als Stellglieder für Steuer- und Regeleinrichtungen sowie in numerisch gesteuerten Werkzeugmaschinen u. dgl. eingesetzt. Sie bieten hierbei den Vorteil, daß durch Ansteuerung über eine digitale Steuerelektronik eine genaue, reproduzierbare Einstellung bzw. Positionierung sichergestellt und eine Rückmeldung nicht erforderlich ist. Grenzen für die Einsatzmöglichkeiten von Schrittmotoren sind einerseits durch das verfügbare Drehmoment und andererseits durch die kürzestmögliche Einstellzeit gegeben. Die Zeitkonstante handelsüblicher Schrittmotoren liegt im Millisekundenbereich. Vor allem dann, wenn das größte abgebbare Drehmoment eines Schrittmotors nicht benötigt wird, läßt sich die Schrittfrequenz des Schrittmotors ohne Erhöhung der thermischen Belastung durch die Maßnahme steigern, daß mit den Motorwicklungen ohmsche Widerstände in Reihe geschaltet werden und die Speisespannung entsprechend hinaufgesetzt wird. Dadurch wird allerdings der Gesamtwirkungsgrad verschlechtert, so daß im allgemeinen ein Kompromiß zwischen Betriebsfrequenz, Motorausnützung und Leistungsaufnahme notwendig ist. Die vorstehend angeführte Maßnahme beruht auf einer Verkleinerung der Zeitkonstante $L/R$, wobei $L$ die Selbstinduktion der Motorwicklung und $R$ die Summe aller damit in Reihe liegenden ohmschen Widerstände, d. h. Wicklungswiderstand und gegebenenfalls zugeschaltete äußere Widerstände, bedeuten. Die Fortführung dieses Gedankens läuft darauf hinaus, die Wicklungen des Schrittmotors zweckmäßig aus einen eingeprägten Strom liefernden elektrischen Energiequellen zu speisen. Der praktischen Realisierung dieses Gedankens steht der Umstand entgegen, daß bei den Schaltvorgängen an den Wicklungen sehr hohe Selbstinduktions-Gegenspannungen auftreten, aus welchem Grund zur Ermöglichung der Aufrechterhaltung eines Stromes vorbestimmter Richtung und Größe die als Stromquellen geschalteten Leistungstransistoren von einer Gleichspannungsquelle mit hoher Spannung versorgt werden müßten, was zu einer weiteren Verschlechterung des Gesamtwirkungsgrades und zu Schwierigkeiten bei der Abführung der Verlustwärme von den Leistungstransistoren führen würde. Abgesehen davon steht aber eine genügend hohe Gleichspannung für eine solche Betriebsweise gar nicht in allen Anwendungsfällen zur Verfügung, beispielsweise, wenn die Stromversorgung des Schrittmotors aus dem Bordnetz eines Kraftfahrzeuges mit einer Spannung von 12 Volt oder 24 Volt erfolgt.

Aus der FR-A-2 325 237 ist eine Schrittmotoranordnung bekannt, bei welcher die Schaltspannungen für den Schrittmotor von einer Multivibratorschaltung mit einer vorbestimmten Betriebsfrequenz geliefert werden. Zu den Phasenwicklungen des Schrittmotors sind zwecks Resonanzabstimmung auf die Betriebsfrequenz Kondensatoren parallelgeschaltet. Eine besonders schnelle Stromwendung tritt bei dieser Art der Abstimmung nicht auf und es läßt sich bei unmittelbarem Anschluß eines Parallelschwingkreises an einen Multivibrator auch keine Resonanzüberhöhung der Grundwelle der am Schwingkreis auftretenden Wechselspannung erzielen, jedoch braucht beim Betrieb des Schrittmotors mit einer einzigen festen Frequenz der Blindstromanteil (Magnetisierungsstrom) nicht vom Multivibrator aufgebracht zu werden und diesbezüglich ist eine Verbesserung von Leistung und Wirkungsgrad möglich. Zur Erzielung dieser Wirkung beim Betrieb des Schrittmotors mit unterschiedlichen Frequenzen müßten die Kapazitätswerte der Kondensatoren jeweils umgeschaltet werden.

Ein Vorschlag zur Erzielung einer rascheren Stromwendung an den Phasenwicklungen eines Schrittmotors ist in der DD-B-139 966 enthalten, wobei durch Zuschalten eines Kondensators auf eine Resonanzfrequenz von etwa dem 0,35fachen der (höchsten) Schrittfrequenz abgestimmt wird. Danach ist jede Phasenwicklung in Reihe mit einem durch einen Kondensator überbrückten Vorwiderstand an die Diagonale einer Transistorbrückenschaltung angeschlossen, bei welcher, wie allgemein üblich, zu den Transistoren aller vier Brückenzweige Schutzdioden parallelgeschaltet sind. Durch die Klemmwirkung dieser Schutzdioden wird der mögliche Spannungshub an den Knotenpunkten der Brückendiagonale auf den Bereich der Betriebsspannung beschränkt, weswegen ein Parallelschwingkreis hier nicht anwendbar ist, weil an diesem ein freies Durchschwingen der Spannung bei einem Schaltvorgang durch die Schutzdioden behindert würde. Diese Schwierigkeit ist bei der bekannten Anordnung durch die Anwendung eines Reihenschwingkreises umgangen, was jedoch mit anderen Nachteilen verbunden ist. So geht aus der DD-B-139 966 hervor, daß die bekannte Anordnung nur für einen eingeengten Schrittfrequenzbereich geeignet ist. Schließt man nämlich die Phasenwicklung nur in Reihe mit einem Kondensator an die von der Transistorschaltung gebildete bipolare Schaltspannungsquelle an, dann ist ein derartiger Kreis für Gleichstrom undurchlässig und für den Betrieb mit niedrigen Schrittfrequenzen ungeeignet. Daher muß parallel zum Kondensator ein ohmscher Widerstand liegen. Ein solcher Widerstand vermindert die elektrische Kreisgüte des aus der Phasenwicklung und dem Kondensator gebildeten Reihenresonanzkreises und aus diesem Grund darf der Widerstandswert nicht zu klein gewählt werden. Wenn aber der Widerstandswert in der Größenordnung des Spulenwiderstandes der der Phasenwicklung liegt oder größer als dieser ist, dann muß, um im eingeschwungenen Zustand einen vorbestimmten Betriebsstrom durch die Phasenwicklung treiben zu können, die Betriebsspannung höher sein als beim Betrieb des Schrittmotors ohne in Reihe mit den Phasenwicklungen geschaltete RC-Glieder. Dadurch wird, bezogen auf den Betrieb des Schrittmotors (auch) mit niedrigen Schrittfrequenzen, der Wirkungsgrad nicht verbessert, sondern sogar verschlechtert, was gerade bei batteriebetriebenen Geräten nicht außer acht gelassen werden darf, zumal die Batteriespannung im allgemeinen bereits festliegt und nicht nach Belieben erhöht werden kann. Insofern kann für den Betrieb mit niedrigen bis mittleren Schrittfrequenzen die bekannte Schaltung sogar eine Verschlechterung des Wirkungsgrades mit sich bringen.

Die Erfindung zielt darauf ab, eine Schaltungsanordnung zu schaffen, die eine schnellere Stromwendung an den Wicklungen von Schrittmotoren ermöglicht, ohne daß hierfür die Betriebsspannung erhöht zu werden braucht oder die Leistungsbilanz verschlechtert oder der Bereich anwendbarer Schrittfrequenzen nach unten hin eingeschränkt wird. Zur Lösung dieser Aufgabe besteht die Erfindung bei einer Schaltungsanordnung der eingangs angegebenen Art im wesentlichen darin, daß in an sich bekannter Weise zu jeder Phasenwicklung des Schrittmotors der zusätzliche Kondensator parallelgeschaltet ist und daß in den zwei von den beiden Enden der Phasenwicklung zu dem anderen Pol der Betriebsspannung führenden Brückenzweigen jeder Transistorbrückenschaltung je eine Entkopplungsdiode geschaltet ist. Durch den Kondensator wird die verlustbehaftete Induktivität der Motorwicklung zu einem Parallelschwingkreis ergänzt. Durch das Unterbrechen eines durch die Wicklung fließenden Stromes bewirkt die im Magnetfeld gespeicherte Engergie beim Zusammenbrechen des Feldes einen Stromfluß im Schwingkreis, wobei die Schwingfrequenz und damit die Geschwindigkeit der Stromwendung an der Motorwicklung durch die Wahl des Kapazitätswertes des Kondensators im Zusammenwirken mit der gegebenen Induktivität der Wicklung bedingt ist. Die Entkopplungsdioden erlauben ein freies Durchschwingen der Spannung ohne Polaritätsumkehrung an der Kollektor-Emitterstrecke eines der Leistungstransistoren. Durch diese Wirkungsweise der Anordnung ist die Möglichkeit geboten, auch im Falle einer vorgegebenen kleinen Versorgungsspannung, welche mit einfachen Mitteln nicht erhöht werden kann, eine rasche Stromwendung an der Motorwicklung zu erzielen, so daß der Motor erforderlichenfalls mit hoher Schrittfrequenz betrieben werden kann.

Bei einer erfindungsgemäßen Schaltungsanordnung, bei welcher jede eine Phasenwicklung schaltende Transistorbrückenschaltung aus komplementären Transistoren aufgebaut ist, deren Emitter an die Pole der Betriebsspannung angeschlossen sind und deren Kollektoren paarweise miteinander in Verbindung stehen, sind zu zwei Transistoren, vorzugsweise den npn-Transistoren, Schutzdioden parallelgeschaltet und es liegt zweckmäßig je eine der Entkopplungsdioden in der Kollektorleitung jedes der beiden anderen Transistoren, vorzugsweise der pnp-Transistoren. Die Transistor-Brückenschaltung, bei welcher die Emitter sämtlicher Transistoren an festen Potentialen liegen, erfordert seitens der Treiberschaltung nur geringe Spannungsamplituden zum Ansteuern der Leistungstransistoren. Die zu zweien der Leistungstransistoren parallel liegenden Schutzdioden verhindern beim Durchschwingen der Spannung an dem aus der Wicklung mit dem parallelgeschalteten Kondensator gebildeten Schwingkreis eine Polaritätsumkehr der an der Kollektor-Emitterstrecke dieser Transistoren anliegenden Spannung. Die in den Kollektorleitungen der beiden anderen Transistoren liegenden Entkopplungsdioden schützen diese Transistoren gegen einen Durchbruch durch schädliche Überspannungen. Bei komplementären Siliziumtransistoren sind im allgemeinen die pnp-Typen weniger spannungsfest als die npn-Typen und daher sind die Entkopplungsdioden zweckmäßig in den Kollektorleitungen der pnp-Transistoren vorgesehen.

Weitere Sicherheit gegen Überlastung der Leistungstransistoren der Brückenschaltung ist erzielbar, wenn jede eine Phasenwicklung mit parallel angeschlossenem Kondensator schaltende Transistorbrückenschaltung von einer einen eingeprägten Strom liefernden Quelle oder von einer Spannungsquelle mit Strombegrenzung versorgt ist. Es können dann erforderlichenfalls unbedenklich auch Kondensatoren mit hohem Kapazitätswert ohne in Reihe liegenden Schutzwiderstand zu den Motorwicklungen parallelgeschaltet werden und es spielt für die Betriebssicherheit der Schaltungsanordnung keine Rolle, ob die Ansteuerimpulse für die verschiedenen Leistungstransistoren lückenlos aneinander anschließen oder einander sogar überlappen, in welch letzterem Falle bei jedem Umschaltvorgang kurzzeitig alle vier Leistungstransistoren der Brückenschaltung im leitenden Zustand sind.

Die Erfindung wird nachfolgend an Hand eines in der Zeichnung dargestellten Ausführungsbeispiels näher erläutert. Es zeigt

Fig. 1 eine bekannte Schaltungsanordnung zum Speisen einer Wicklung eines Schrittmotors und

Fig. 2 ein Diagramm mit dem zeitlichen Verlauf des Stromes durch die Wicklung und der Spannung an der Wicklung;

Fig. 3 eine erfindungsgemäß ausgebildete Schaltungsanordnung zum Speisen einer Wicklung eines Schrittmotors und

Fig. 4 ein zugehöriges Diagramm mit dem zeitlichen Verlauf des Stromes durch die Wicklung und der Spannung an der Wicklung mit dem parallelgeschalteten Kondensator.

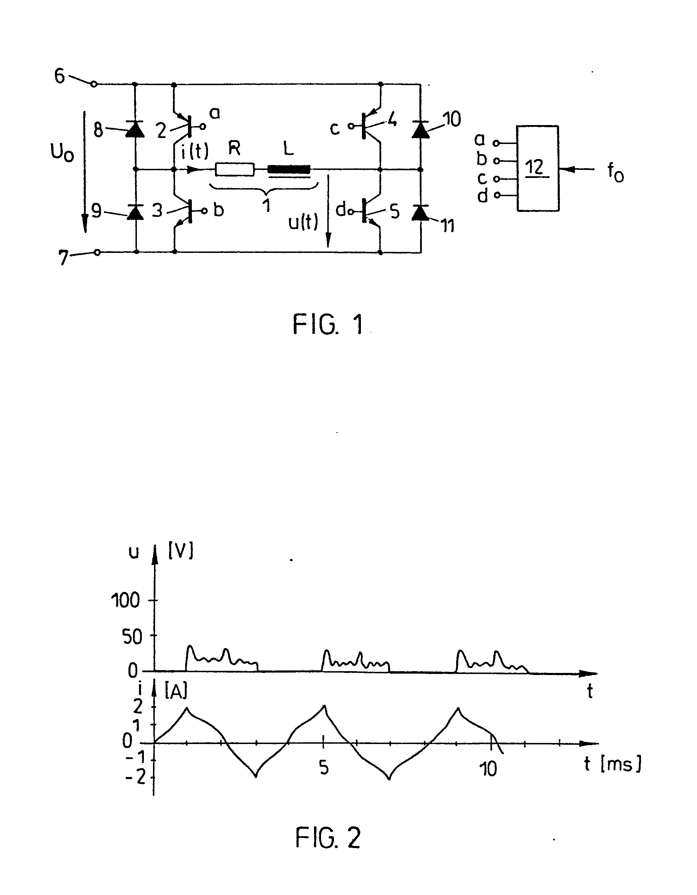

Fig. 1 zeigt eine Schaltungsanordnung nach dem Stand der Technik. Hierbei ist von einem Zweiphasen-Schrittmotor nur die Ansteuerung einer Phase dargestellt. Die Wicklung 1 des Schrittmotors weist eine Induktivität L und einen ohmschen Widerstand R auf. Zum Schalten der Wicklung 1 ist eine Brückenschaltung aus vier Leistungstransistoren 2, 3, 4 und 5 vorgesehen. Die Transistoren 2 und 4 sind pnp-Transistoren, deren Emitter an der positiven Klemme 6 einer Spannungsquelle liegen, und die Transistoren 3 und 5 sind npn-Transistoren, deren Emitter an der negativen Klemme 7 der Spannungsquelle liegen. Die Kollektoren der beiden komplementären Paare von Transistoren 2, 3 und 4, 5 sind jeweils miteinander verbunden und in der Brückendiagonale zwischen den beiden Kollektorverbindungsleitungen liegt die Wicklung 1 des Schrittmotors. Zu jedem der Transistoren 2, 3, 4 und 5 ist je eine Schutzdiode 8, 9, 10 bzw. 11 parallelgeschaltet. Diese Dioden sind im Ruhezustand durch die an den Klemmen 6 und 7 anliegende Versorgungsspannung in Sperrichtung vorgespannt und dienen dazu, den jeweils parallel liegenden Transistor gegen beim Abschalten oder Umschalten eines durch die Wicklung 1 fließenden Stromes auftretende Selbstinduktionsspannungen zu schützen, deren Amplitude die Spannungsfestigkeit der Transistoren überschreiten könnte und in deren Verlauf eine Polaritätsumkehr der an den Transistoren anliegenden Spannung auftreten könnte, wodurch die Kollektor-Basisdiode der Transistoren in den leitenden Zustand käme. Mit 12 ist die Ansteuerlogik für die Leistungstransistoren bezeichnet, deren Eingang ein Steuersignal mit einer Frequenz $f_0$ zugeführt wird und deren Ausgänge a, b, c und d mit den entsprechend bezeichneten Basisanschlüssen der Leistungstransistoren verbunden sind und Treibersignale liefern.

Das in Fig. 2 dargestellte Diagramm zeigt in der oberen Hälfte den zeitlichen Verlauf der Spannung an einem Ende der Motorwicklung, und zwar am rechten Ende in Fig. 1, d. h. an der Verbindungsstelle der Kollektoren der Transistoren 4 und 5 bzw. an der Verbindungsstelle der Dioden 10 und 11, und in der unteren Hälfte den zeitlichen Verlauf des durch die Wicklung 1 fließenden Stromes. Die Schrittfrequenz $f_0$ wurde nahe bei der oberen Grenzfrequenz, mit welcher der Motor in dieser Schaltungsanordnung noch betrieben werden kann, gewählt und beträgt 1000 Hz. Der Maximalwert der an den Klemmen 6 und 7 anliegenden Versorgungsspannung $U_0$ beträgt 18 V und der Effektivwert des Stromes $I_{eff}$ beträgt 0,8 A. Der zeitliche Verlauf des durch die Wicklung 1 fließenden Stromes als Folge eines mittels der Leistungstransistoren der Brückenschaltung bewirkten Umschaltvorganges der angelegten Spannung läßt sich angenähert durch die folgende Formel beschreiben:

$$i(t) = \frac{U_0 - U \text{ gegen}}{R} \left(1 - e^{-\frac{R}{L}t}\right)$$

Die bei der Stromwendung an der Wicklung entstehende Gegenspannung wird über je zwei der zu den Leistungstransistoren parallelgeschalteten Dioden gegenüber der an den Klemmen 6 und 7 angeschlossenen Spannungsquelle kurzgeschlossen, so daß die Stromwendung in der Wicklung von einer verhältnismäßig kleinen Spannung getrieben wird. Dabei wird der Wicklung die gesamte vorher im Magnetfeld gespeicherte Energie entzogen, die nun von der Quelle neuerlich zur Gänze aufgebracht werden muß. Der sich in diesem Zusammenhang bei hohen Schrittfrequenzen ergebende nahezu dreieckförmige Verlauf des Stromes in der Wicklung hat besonders in jenen Fällen, in welchen die Versorgungsspannung einen festen vorgegebenen Wert hat und nicht erhöht werden kann, eine Beschränkung der höchsten möglichen Schrittfrequenz zur Folge.

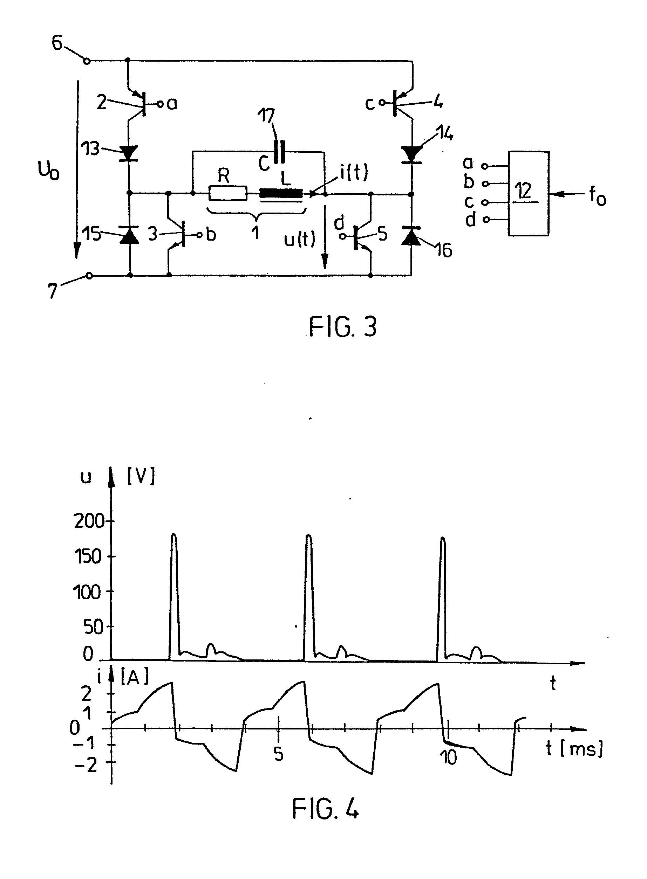

Das Problem wird gemäß der Erfindung dadurch gelöst, daß die eine verlustbehaftete Induktivität darstellende Motorwicklung durch Parallelschalten eines Kondensators zu einem Schwingkreis ergänzt wird. Die Schaltung der Brückenendstufe wird hierbei abgewandelt, wie dies in Fig. 3 dargestellt ist. Es ist wieder die Speisung der Phase des selben Zweiphasen-Schrittmotors wie gemäß Fig. 1 gezeigt und die Wicklung 1 sowie die Leistungstransistoren 2, 3, 4, 5 und deren Ansteuerschaltung 12 haben die gleichen Funktionen wie bei der bekannten Schaltungsanordnung. Unterschiedlich ist die Anordnung je einer Entkopplungsdiode 13, 14 in der Kollektorleitung jedes pnp-Transistors 2 bzw. 4. Die Schutzdioden 15 und 16 haben ähnliche Funktionen wie die Dioden 9 und 11 bei der Schaltungsanordnung gemäß Fig. 1. Wesentlich für die erfindungsgemäße Schaltungsanordnung ist die Parallelschaltung eines Kondensators 17 zur Wicklung 1.

Zu dieser Schaltungsanordnung zeigt das Diagramm gemäß Fig. 4 in der oberen Hälfte den zeitlichen Verlauf der Spannung am rechten Ende der Wicklung 1 in Fig. 3 und in der unteren Hälfte den zeitlichen Verlauf des durch die Wicklung 1 fließenden Stromes. Der Maximalwert der Versorgungsspannung $U_0$ an den Klemmen 6 und 7 beträgt wieder 18 V. Durch die Anwendung der Erfindung läßt sich aber nun bei gleicher Versorgungsspannung und der selben Schrittfrequenz $f_0$ von 1000 Hz ein Effektivwert des durch die Wicklung 1 des selben Schrittmotors fließenden Stromes $I_{eff}$ von 2,15 A erzielen. Somit ist bei gleicher Betriebsspannung ein höheres Drehmoment bzw. eine höhere maximale Schrittfrequenz erzielbar.

Durch die erfindungsgemäße Verbesserung der Schaltungsanordnung wird beispielsweise nach dem Abschalten der vorher leitend gewesenen Transistoren 2 und 5 die im Magnetfeld der Wicklung 1 gespeicherte Energie über den Kondensator 17 umschwingen, wobei der Kondensator die Schwingfrequenz und die maximale an der Last auftretende Spannung bestimmt. Hierbei wird angenähert

$$u_L \leq \sqrt{\frac{L}{C}} \cdot \hat{i}(t)$$

und die Kreisfrequenz

$$\omega_0 = 1/\sqrt{LC}.$$

Während der Dauer des Umschwingvorganges entkoppeln der gesperrte Transistor 5 und die Diode 14 den Schwingkreis 1, 17 von der Brücke und die Transistoren 3 und 4 können eingeschaltet werden. Nach dem Ende des Umschwingvorganges übernehmen die Transistoren 3 und 4 den Speisestrom für die Wicklung 1 und die Quelle muß nur die Verluste, die beim Umschwingen entstanden sind, decken. Der Vorteil der erfindungsgemäßen Schaltungsanordnung tritt bei kleinen Versorgungsspannungen $U_0$ besonders hervor, da beim Umschwingen infolge der Spannungsüberhöhung an den Klemmen der Wicklung 1 einige hundert Volt auftreten können, was den Vorgang beträchtlich beschleunigt. Die große Spannung tritt als Sperrspannung an der Diode 14 und am Transistor 5 bzw. an der Diode 13 und am Transistor 3 auf und ist mit den Bauelementen leicht beherrschbar.

**Patentansprüche**

1. Schaltungsanordnung zur Beeinflussung der Stromwendung bei einem Schrittmotor, bei dem die Phasenwicklung (1) bzw. Phasenwicklungen jeweils zur Bildung eines Schwingkreises mit einem zusätzlichen Kondensator (17) beschaltet und an die Brückendiagonale einer aus vier Schalttransistoren bestehenden Transistorbrückenschaltung (2—5) angeschlossen ist bzw. sind, wobei zu zwei mit dem einen Pol (7) der Betriebsspannung verbundenen Transistorschaltern (3, 5) Schutzdioden (15, 16) parallelgeschaltet sind, dadurch gekennzeichnet, daß in an sich bekannter Weise zu jeder Phasenwicklung (1) des Schrittmotors der zusätzliche Kondensator (17) parallelgeschaltet ist und daß in den zwei von den beiden Enden der Phasenwicklung (1) zu dem anderen Pol (6) der Betriebsspannung ($U_0$) führenden Brückenzweigen (2, 4) jeder Transistorbrückenschaltung (2—5) je eine Entkopplungsdiode (13, 14) geschaltet ist.

2. Schaltungsanordnung nach Anspruch 1, wobei jede eine Phasenwicklung (1) schaltende Transistorbrückenschaltung (2—5) aus komplementären Transistoren aufgebaut ist, deren Emitter an die Pole (6, 7) der Betriebsspannung ($U_0$) angeschlossen sind und deren Kollektoren paarweise miteinander in Verbindung stehen, dadurch gekennzeichnet, daß die Schutzdioden (15, 16) vorzugsweise den beiden npn-Transistoren parallelgeschaltet sind und daß je eine der Entkopplungsdioden (13, 14) in der Kollektorleitung jedes der beiden anderen Transistoren (2, 4), vorzugsweise der pnp-Transistoren, liegt.

3. Schaltungsanordnung nach Anspruch 1 oder 2, dadurch gekennzeichnet, daß jede eine Phasenwicklung (1) mit parallel angeschlossenem Kondensator (17) schaltende Transistorbrückenschaltung (2—5) von einer einen eingeprägten Strom liefernden Quelle oder von einer Spannungsquelle mit Strombegrenzung versorgt ist.

**Claims**

1. Circuit for influencing the commutation in a stepper motor, in which the phase winding (1) or phase windings is (are) connected each with an additional capacitor (17) for forming an oscillating circuit and is (are) connected with the diagonal of bridge of a transistor bridge connection (2—5) consisting of four switching transistors, protective diodes (15, 16) being connected in parallel to two of the transistor switches (3, 5) connected with one pole (7) of the operating voltage, characterized in that the additional capacitor (17) ist connected in parallel in a way known per se to each phase winding (1) of the stepper motor and that one decoupling diode each is interconnected in the two bridge branches (2, 4) of each transistor bridge connection leading from the two ends of the phase winding (1) to the other pole (6) of the operating voltage ($U_0$).

2. Circuit as claimed in claim 1, wherein each transistor bridge connection (2—5) switching a phase winding (1) is composed of complementary transistors the emitters of which are connected with the poles (6, 7) of the operating voltage ($U_0$) and the collectors of which are connected with each other in pairs, characterized in that the protective diodes (15, 16) are connected in parallel preferably to the two npn-transistors and that each of the decoupling diodes (13, 14) is placed in the collector line of each of the two other transistors (2, 4), preferably of the pnp-transistors.

3. Circuit as claimed in claim 1 or 2, characterized in that each transistor bridge connection (2—5) switching a phase winding (1) comprising a capacitor connected in parallel (17) is fed by a source supplying a load independent current or by a voltage source having a current limiter.

**Revendications**

1. Circuit pour influencer la commutation dans un moteur pas-à-pas dans lequel l'enroulement (ou les enroulements) de phase (1) est (sont) conecté(s) respectivement avec un condensateur supplémentaire (17) pour former un circuit oscillant et relié(s) à la diagonale de pont d'un circuit à pont de transistors (2 à 5) composé de quatre transistors commutateurs, des diodes protectrices (15, 16) étant montées en parallèle à deux commutateurs à transistor (3, 5) reliés à l'un des deux pôles (7) de la tension de régime, caractérisé en ce que le condensateur supplémentaire (17) est relié en parallèle à chaque enroulement de phase (1) du moteur pas-à-pas de façon connue en soi et qu'une diode de désaccouplement (13, 14) à la fois est intercalée dans chaque des deux branchements (2, 4) de chaque circuit à pont de transistors (2 à 5) lesquels mènent des deux extrémités de l'enroulement de phase (1) à l'autre pôle (6) de la tension de régime (U₀).

2. Circuit selon la revendication 1 dans lequel chaque circuit à pont de transistors (2 à 5) actionnant un enroulement de phase (1) est composé de transistors complémentaires dont les émetteurs sont reliés aux pôles (6, 7) de la tension de régime (U₀) et dont les collecteurs sont connectés l'un à l'autre par paires, caractérisé en ce que les deux diodes protectrices (15, 16) sont reliées en parallèle de préférence aux deux transistors npn et qu'une desdites diodes de désaccouplement (13, 14) à la fois est disposée dans la ligne de collecteur de chaque des deux autres transistors (2, 4), de préférence des transistors pnp.

3. Circuit selon la revendication 1 ou 2, caractérisé en ce que chaque circuit à pont de transistors (2 à 5) actionnant un enroulement de phase (1) comprenant und condensateur (17) relié en parallèle est alimenté par une source débitant un courant indépendant de la charge ou par une source de tension comprenant un limiteur de courant.

FIG. 1

FIG. 2

FIG. 3

FIG. 4